# EUROPÄISCHE PATENTSCHRIFT

(11) **EP 3 724 540 B1**
(45) Veröffentlichungstag und Bekanntmachung des Hinweises auf die Patenterteilung: **23.04.2025**
(21) Anmeldenummer: 19703722.9
(22) Anmeldetag: 07.02.2019
(51) Int. Cl.: F16J 15/3296, F16J 15/34, F16L 27/08, G01D 5/14, G01L 3/10, G01L 1/12

(54) **DYNAMISCHE DICHTUNG UND DREHDURCHFÜHRUNG MIT EINER SOLCHEN DYNAMISCHEN DICHTUNG**
DYNAMIC SEAL AND ROTARY FEEDTHROUGH COMPRISING A DYNAMIC SEAL OF THIS KIND
JOINT DYNAMIQUE ET PASSAGE ROTATIF POURVU D'UN TEL JOINT DYNAMIQUE

(30) Priorität: 23.04.2018 DE 102018206219
(43) Veröffentlichungstag der Anmeldung: 21.10.2020
(73) Patentinhaber: Christian Maier GmbH & Co. KG, 89520 Heidenheim (DE)
(72) Erfinder: HÖRGER, Lukas, 89522 Heidenheim (DE); SCHWENK, Günther, 89520 Heidenheim (DE); SCHARTING, Markus, 89542 Herbrechtingen (DE); SZAM, Peter, 89547 Gerstetten (DE)
(74) Vertreter: Dr. Weitzel & Partner
(86) Internationale Anmeldenummer: PCT/EP2019/052955
(87) Internationale Veröffentlichungsnummer: WO 2019/206480

(56) Entgegenhaltungen:
- EP-A1- 1 336 807
- DE-A1- 102016 214 942
- DE-U1- 202009 008 088
- DE-U1- 202009 008 089

## Beschreibung

Die vorliegende Erfindung betrifft eine dynamische Dichtung zur Abdichtung wenigstens eines Kanals und/oder Raumes gegenüber einer Umgebung, wobei der Kanal und/oder Raum ein Fluid führt und sich in einem stationären Bauteil und einem um eine Drehachse rotierenden Bauteil erstreckt. Die Erfindung betrifft insbesondere eine Drehdurchführung mit einer solchen dynamischen Dichtung, wobei mit der Drehdurchführung Fluid von dem stationären in das rotierende Bauteil oder umgekehrt überführt werden kann.

Dynamische Dichtungen lassen sich unterscheiden in axiale und radiale Dichtungen, wobei prinzipiell auch axial-radial-Dichtungen in Betracht kommen, beispielsweise weil der abzudichtende Dichtspalt oder die abzudichtende Dichtfläche schräg zur Drehrichtung des rotierenden Bauteils verläuft. Besonders die axialen Dichtungen werden auch als Gleitringdichtung bezeichnet. Die vorliegende Erfindung ist bei jeglicher Dichtung anwendbar, bei welcher ein rotierendes Bauteil gegenüber einem stationären Bauteil abgedichtet wird, um einen fluidführenden Kanal und/oder Raum gegenüber der Umgebung abzudichten. Insofern umfassen die Begriffe Gleitring und Gegenring einer erfindungsgemäßen dynamischen Dichtung jegliche Bauteile, die dichtend gegeneinander abgestützt sind und von denen eines stationär ist und das andere mit dem rotierenden Bauteil umläuft.

Gleitringdichtungen, ungeachtet dessen, ob sie eine Abdichtung in Radialrichtung oder Axialrichtung oder winklig hierzu aufweisen, unterliegen einem Verschleiß, sodass der Gleitring und/oder der Gegenring von Zeit zu Zeit ausgetauscht werden muss. Dementsprechend werden bei Gleitringdichtungen Serviceintervalle zum Austausch des Gleitringes und gegebenenfalls des Gegenringes vorgesehen. Die Serviceintervalle müssen dabei derart bemessen sein, dass der Austausch rechtzeitig erfolgen kann, bevor eine unzulässige Undichtigkeit in der Gleitringdichtung entsteht, die zu einem unerwünschten Austritt des Fluides aus dem Kanal oder Raum, der mit der Gleitringdichtung gegenüber einer Umgebung abgedichtet wird, führt. Ein solcher Austritt ist besonders dann gravierend, wenn es sich bei dem Fluid um ein die Umgebung oder Umwelt schädigendes oder ein anderes gefährliches Fluid handelt.

Der fortschreitende Verschleiß einer Gleitringdichtung, oder im allgemeinen einer dynamischen Dichtung, der die Länge des notwendigen Austauschintervalls bestimmt, hängt zum einen von der Umgebung ab, in welcher die Gleitringdichtung betrieben wird. So haben die Fluidzusammensetzung, die Temperatur und/oder der Druck hierauf einen entscheidenden Einfluss. Hinzu kommt der Einfluss der Drehzahl des umlaufenden Bauteils, der Einfluss von Verschmutzungen und andere Randbedingungen.

Bei einem fest vorgegebenen Austauschintervall besteht daher die Gefahr, dass es zu einem vorzeitigen Verschleiß der Gleitringdichtung kommt, sodass das Austauschintervall im Einzelfall zu lang bemessen ist. In anderen Fällen, in denen sich ein geringer Verschleiß einstellt, kann das vorgegebene Austauschintervall zu kurz sein, was unwirtschaftlich ist.

GB 2 395 532 A schlägt daher vor, beispielsweise in einem Kraftwerk neben anderen Bauteilen auch die zahlreichen vorgesehenen Gleitringdichtungen zu überwachen, um einen übermäßigen Verschleiß und damit die Gefahr einer Undichtigkeit feststellen zu können. Hierfür werden verschiedene Sensoren vorgeschlagen, die an eine Datenerfassungs- und Weiterverarbeitungseinrichtung angeschlossen sind und mit denen Kräfte, Drehmoment oder Vibrationen, die über die Gleitringdichtung übertragen werden, erfasst werden können. Gemäß einer Ausführungsform wird der stationäre Ring einer Gleitringdichtung über einen mit Stiften versehenen Ring in einem Gehäuse abgestützt, wobei die Stifte mit einer Spannungsmesseinrichtung versehen sind, aus denen die auf die Gleitringdichtung wirkende Kraft, das Drehmoment oder Vibrationen geschlossen werden kann. Eine weitere Ausführungsform sieht das Vorsehen der Spannungsmesseinrichtung unmittelbar auf einem Abstützring vor. Gemäß einer weiteren Ausführungsform ist der Ring über einen Linearmessaufnehmer gegen Verdrehung abgestützt, sodass ein entsprechendes Abstützdrehmoment ermittelt werden kann. Schließlich wird gemäß einer weiteren Ausführungsform vorgeschlagen, die über die Gleitringdichtung wirkende Kraft, das Drehmoment oder Vibrationen mit einem Lagesensor zu erfassen, wobei der Sensor eine Änderung in der Axialrichtung eines Federn tragenden Ringes, gegen welche der Gegenring der Gleitringdichtung in der Axialrichtung abgestützt ist, erfasst.

WO 92/02747 A1 offenbart eine Drehdurchführung, wobei die Gleiteigenschaften des Gleitringes weitgehend trägheitsfrei bestimmbar sind, sodass sich bereits anbahnende Schäden erkannt und verhindert werden können. Der Dichtring stützt sich dabei in radialer Richtung auf einer rotierenden Welle ab und weist einen radialen Vorsprung auf, der sich an einem in einem ortsfesten Gehäuse eingebrachten Biegestab abstützt. Durch das auf den Dichtring von der Welle übertragene Drehmoment wird der Biegestab elastisch verbogen, wobei die Verbiegung mittels eines Dehnungsmessstreifens in Verbindung mit einer entsprechenden Auswerteeinrichtung gemessen und weiterverarbeitet wird. Alternativ ist zwischen dem Biegestab und einem Widerlager ein piezoelektrischer Messaufnehmer eingefügt, der eine elektrische Spannung erzeugt, die in einer Auswerteeinrichtung messbar und verwertbar ist, um das Drehmoment zu bestimmen. Durch zusätzliche Dehnungsmessstreifen können zwei komplementäre Signale zur Verbesserung der Messgenauigkeit ausgewertet werden.

DE 10 2012 213 510 B3 offenbart einen Dichtungsprüfstand, wobei ein Reibelement mittelbar oder unmittelbar auf eine Kraftmesseinrichtung einwirkt, um auf die Reibverhältnisse in der Dichtung zu schließen.

DE 20 2009 008 088 U1 offenbart eine Gleitringdichtung mit druckgeschützter Überwachungseinrichtung, um den Betriebszustand der Gleitringdichtung zu überwachen. Es ist ein Abstandssensor oder Kraftsensor vorgesehen, der eine Verkippung eines radial zur umlaufenden Welle positionierten Stiftes erfasst, um auf den Gleitzustand in der Gleitringdichtung zu schließen.

WO 2008/089800 A1 offenbart eine Gleitringdichtung mit Überwachung des Betriebszustandes. Die Überwachungseinrichtung umfasst eine im Drehkraftfluss zwischen einem stationären Bauteil und einem drehgesicherten Gleitring vorgesehene Kraftmesseinrichtung, mit einem Kraftsensor, bei dem es sich um irgendein geeignetes elektrisches, zum Beispiel piezoelektrisches, hydraulisches oder pneumatisches Element handelt. Die Kraft wirkt dabei in Tangentialrichtung zur Drehachse.

Die bekannten Gleitringdichtungen mit Überwachungseinrichtung weisen den Nachteil auf, dass die Überwachungseinrichtung einen vergleichsweise komplexen Aufbau hat, der mit vergleichsweise hohen Kosten verbunden ist. Ferner ist die Integration der Überwachungseinrichtung in die Gleitringdichtung oder eine Drehdurchführung mit einer solchen Gleitringdichtung mit einer entsprechend notwendigen Anpassung der Bauteilumgebung verbunden und, wenn für verschieden große Drehdurchführungen dieselbe Überwachungsvorrichtung verwendet werden soll, so ist eine Anpassung an die verschiedenen zulässigen, in der Gleitringdichtung auftretenden Drehmomentgrößen bei stark unterschiedlich großen Drehmomenten mit einem notwendigen Austausch des Sensors verbunden, beziehungsweise mit der Auswahl eines Sensors, der den geeigneten Arbeitsbereich aufweist.

DE 20 2009 008 089 U1 offenbart eine Gleitringdichtung mit einer Überwachungseinrichtung zur Überwachung eines Betriebszustands der Gleitringdichtung, wobei die Überwachungseinrichtung einen Balken mit einem Sensorelement zur Erfassung einer Verbiegung des Balkens, insbesondere einem Dehnungsmessstreifen, umfasst.

DE 20 2009 008 088 U1 offenbart eine Gleitringdichtung mit einer Überwachungseinrichtung zur Überwachung eines Betriebszustandes der Gleitringdichtung, wobei die Überwachungseinrichtung einen Sensor, eine Hülse und einen Stift umfasst, wobei der Stift in der Hülse angeordnet ist und mit der Hülse fest verbunden ist, und wobei der Stift frei durch ein stationäres Bauteil der Gleitringdichtung geführt ist, wobei der Sensor derart mit dem Stift in Wirkverbindung steht, dass der Sensor eine örtliche Versetzung des Stiftes erfasst, und wobei die Hülse fest an dem stationären Bauteil fixiert ist und ein freier Endbereich der Hülse mit dem stationären Gleitring in Kontakt ist.

DE 10 2016 214 942 A1 offenbart eine Lippendichtung und ein Verfahren zum Bestimmen eines Zustands einer Lippendichtung oder einer von der Lippendichtung abgedichteten Einheit, wobei ein Magnet und ein Magnetfeldsensor an einer Dichtlippe und einem Körperteil der Lippendichtung zusammenarbeiten, um einen Abstand zwischen diesen Teilen zu bestimmen. Der Magnetfeldsensor kann einen Hall-Sensor aufweisen.

Der vorliegenden Erfindung liegt die Aufgabe zugrunde, ausgehend vom Stand der Technik eine verbesserte dynamische Dichtung anzugeben, die eine Überwachung des in der dynamischen Dichtung wirkenden Drehmomentes ermöglicht und dabei kostengünstiger, mit einem möglichst geringen Eingriff in die Umgebung der dynamischen Dichtung ausführbar ist. Bevorzugt soll dabei nicht nur ein durch dynamische Dichtung selbst erzeugtes Drehmoment überwacht werden können, sondern auch andere zwischen dem rotierenden Bauteil und dem stationären Bauteil wirkende Drehmomentgrößen, insbesondere ein durch eine Lagerung, beispielsweise Wälzlagerung mit wenigstens einem Wälzlager erzeugtes Drehmoment. Besonders vorteilhaft soll eine Anpassung der Überwachung der dynamischen Dichtung an verschieden große durch den jeweils vorgegebenen Einzelfall zulässige Drehmomente mit einem besonders geringen Eingriff in die Sensorik und ohne den Austausch eines Sensors, beziehungsweise den Rückgriff auf Sensoren mit verschiedenen Arbeitsbereichen (Erfassungsbereichen) möglich sein.

Die erfindungsgemäße Aufgabe wird durch eine dynamische Dichtung mit den Merkmalen von Anspruch 1 gelöst. In den abhängigen Ansprüchen werden besonders vorteilhafte Ausgestaltungen der Erfindung sowie eine Drehdurchführung mit einer dynamischen Dichtung angegeben.

Eine erfindungsgemäße dynamische Dichtung zur Abdichtung wenigstens eines sich in einem stationären Bauteil und einem um eine Drehachse rotierenden Bauteil erstreckenden, ein Fluid führenden Kanals und/oder Raumes gegenüber einer Umgebung weist einen Gleitring auf, der sich in Richtung der Drehachse oder senkrecht oder winklig hierzu gegen einen Gegenring dichtend abstützt. In der Regel ist wenigstens ein elastisches Element, beispielsweise eine Druckfeder, insbesondere Wellfeder, vorgesehen, die den Gleitring oder den Gegenring oder beides in der Axialrichtung oder der Richtung senkrecht oder winklig hierzu, das heißt in Richtung der Drehachse oder senkrecht oder winklig hierzu gegen den jeweils anderen Ring presst, um die dichtende Abstützung zu erreichen.

Der Gleitring oder der Gegenring ist als stationär gehaltener Ring ausgeführt und der jeweils andere Ring ist als mit dem rotierenden Bauteil umlaufender Ring ausgeführt. Der stationär gehaltene Ring ist in einem stationären Gehäuse gelagert, das in der Umfangsrichtung um die Drehachse über eine Drehmomentabstützung abgestützt ist.

Beispielsweise ist der Gleitring als stationär gehaltener Ring ausgeführt. Dabei kann der Gleitring in einer Kassettenform vorgesehen sein, das heißt ein Gleitringgehäuse aufweisen, in welchem der Gleitring in der Axialrichtung, das heißt der Richtung der Drehachse, beweglich gelagert und gegen dieses abgestützt ist, wobei das Gleitringgehäuse den Gleitring in der Umfangsrichtung umschließt. Beispielsweise weist das Gleitringgehäuse einen stirnseitigen Boden und einen daran angeschlossenen Umfangsrand auf, der den Gleitring in der Umfangsrichtung umschließt. Der Umfangsrand kann einen nach innen vorstehenden Vorsprung, insbesondere in Form einer Umbördelung, aufweisen, der/die einen axialen Anschlag für den Gleitring bildet, wobei zwischen dem Boden und einer dem axialen Anschlag abgewandten Stirnseite des Gleitringes ein Federelement, beispielsweise in Form einer Druckfeder, insbesondere Wellfeder, vorgesehen ist, welche/welches den Gleitring elastisch in Richtung des Anschlages mit Druck beaufschlagt. Der Anschlag verhindert dann, dass sich der Gleitring vollständig oder zu weit aus dem Gleitringgehäuse heraus bewegen kann.

Der Gleitring kann mittels eines Dichtelementes, beispielsweise eines O-Ringes, gegen das Gleitringgehäuse abgedichtet sein, insbesondere in der Radialrichtung.

Das Gleitringgehäuse kann beispielsweise aus Stahl beziehungsweise Stahlblech hergestellt sein.

Wenn der Gleitring in der genannten Kassettenform ausgeführt ist und den stationär gehaltenen, das heißt nicht umlaufenden Ring ausbildet, so ist das Gleitringgehäuse in dem stationären Gehäuse gelagert.

Erfindungsgemäß weist die Drehmomentabstützung einen in der Umfangsrichtung mittels einem auf die Drehmomentabstützung wirkenden Drehmoment elastisch verformbaren Arm auf, über welchen das Drehmoment abgestützt ist. Dem Arm ist wenigstens ein Hall-Sensor zugeordnet, welcher die Position eines durch die Verbiegung in der Umfangsrichtung verlagerbaren Bereiches des Arms erfasst.

Erfindungsgemäß ist der verlagerbare Bereich des Arms mit wenigstens einem Permanentmagneten versehen, dessen Position mit dem Hall-Sensor, der dem Permanentmagneten in Richtung der Drehachse gegenübersteht, erfasst wird. Dies ermöglicht eine besonders kostengünstige Ausführungsform der Erfindung.

Gemäß einer bevorzugten Ausführungsform der Erfindung ist der Arm lösbar am Gehäuse oder an einem stationären Bereich, an welchem das Gehäuse über die Drehmomentabstützung abgestützt ist, angeschlossen. Dadurch ist es möglich, einen hinsichtlich seines Biegewiderstandes optimierten Arm im jeweils vorliegenden Einsatzfall auszuwählen und anzuschließen, ohne bauliche Veränderung der anderen Bauteile der dynamischen Dichtung oder der Überwachungseinrichtung, die das Drehmoment erfasst, insbesondere des Hall-Sensors, oder den vorhandenen Arm durch einen anderen Arm mit einer anderen Gestaltung, die besser für den konkreten Anwendungsfall geeignet ist, zu ersetzen. Ferner ist es möglich, ein Set von unterschiedlich dimensionierten Armen vorzusehen, wobei die Arme beispielsweise verschiedene Dicken und/oder Breiten aufweisen, jedoch bevorzugt dieselben Anschlusspunkte, und so aus dem Set einen Arm für den konkreten Einsatzfall auszuwählen, ohne dass die Gleitring für die Integration beziehungsweise den Anschluss des jeweiligen Arms angepasst werden muss.

Gemäß einer Ausführungsform der Erfindung ist ein Temperatursensor zur Erfassung der Temperatur des Arms oder einer Umgebung des Arms vorgesehen, sowie eine Steuervorrichtung, die eingerichtet ist, die Messwerte des Temperatursensors zu verarbeiten, um temperaturabhängige Veränderungen des Biegeverhaltens des Arms bei der Positionserfassung zu berücksichtigen beziehungsweise die Temperaturänderungen zu kompensieren. Der Temperatursensor kann beispielsweise in den Hall-Sensor integriert sein, wobei der Hall-Sensor bevorzugt mit einer temperaturkompensierenden Hall-Sensor-Steuervorrichtung versehen ist, welche die Messwerte des Temperatursensors verarbeitet. Damit kann auch der Hall-Sensor temperaturkompensiert ausgeführt werden.

Der Arm ist gemäß einer Ausführungsform in der Umfangsrichtung beidseitig in einer Gabel abgestützt. Wenn der Arm am Gehäuse angeschlossen ist, so ist die Gabel in dem stationären Bereich vorgesehen. Wenn der Arm am stationären Bereich angeschlossen ist, so ist die Gabel im Gehäuse vorgesehen.

Durch eine solche Ausführungsform mit Gabel kann eine Verlagerung des verlagerbaren Bereiches des Arms in entgegengesetzten Richtungen in der Umfangsrichtung mit dem Hall-Sensor erfasst werden.

Bevorzugt ist der Hall-Sensor eingerichtet, ein Ausmaß der Verlagerung des verlagerbaren Bereiches des Arms in der Umfangsrichtung zu erfassen. Die Erfassung kann dabei in Stufen oder kontinuierlich erfolgen, hinsichtlich des Verlagerungsweges beziehungsweise Verlagerungsausmaßes. Auch zeitlich kann die Erfassung in Intervallen oder kontinuierlich erfolgen.

Gemäß einer Ausführungsform der Erfindung ist dem wenigstens einen Permanentmagneten wenigstens ein zweiter Hall-Sensor zugeordnet, der die Position des verlagerbaren Bereiches des Arms redundant zu dem ersten Hall-Sensor erfasst. Dabei kann ein und derselbe Magnet als Geber für beide Hall-Sensoren verwendet werden. Eine alternative Ausführungsform sieht vor, dass für jeden Hall-Sensor wenigstens ein eigener Permanentmagnet vorgesehen ist.

Gemäß einer Ausführungsform der Erfindung ist der verlagerbare Bereich des Arms mit wenigstens zwei Permanentmagneten auf zwei in Richtung der Drehachse voneinander abgewandten Seiten des Arms versehen und auf den beiden Seiten des Arms ist jeweils ein Hall-Sensor dem jeweiligen Permanentmagneten gegenüberstehend beziehungsweise in Richtung der Drehachse gegenüberstehend angeordnet.

Als besonders günstig hat sich erwiesen, wenn der Arm eine sich radial zur Drehachse erstreckende Armlängsachse und eine sich entlang der Armlängsachse erstreckende Plattenform aufweist, mit zwei voneinander abgewandten, sich entlang der Armlängsachse erstreckenden, zumindest im Wesentlichen ebenen Seiten und zwei die ebenen Seiten verbindenden, sich entlang der Armlängsachse erstreckende Stirnseiten, die gekrümmt sind, insbesondere konkav gekrümmt sind. Damit kann ein optimiertes Biegeverhalten des Arms erreicht werden und die Dicke des Arms, das heißt die Dicke in Richtung einer senkrecht auf den ebenen Seiten stehenden Achse, kann gezielt variiert werden, um den Biegewiderstand des Arms zu verändern und damit für den jeweiligen Einsatzfall anzupassen. Selbstverständlich sind auch Änderungen in der Form der gekrümmten Stirnseiten und/oder in der Breite des Arms und/oder Länge des Arms möglich. Die Länge des Arms verläuft in Richtung der Armlängsachse, die Breite senkrecht hierzu und senkrecht zur Dickenrichtung.

Eine erfindungsgemäße Drehdurchführung weist eine entsprechende dynamische Dichtung, wenigstens einen Fluideinlass und wenigstens einen Fluidauslass auf, wobei der Fluideinlass und der Fluidauslass fluidleitend mit dem ein Fluid führenden Kanal und/oder Raum der dynamischen Dichtung verbunden sind und von denen einer in dem Gehäuse und der andere in dem umlaufenden Bauteil mündet. Somit kann das Fluid entweder über den Fluideinlass in dem Gehäuse und den Fluidauslass in das umlaufende Bauteil oder ein hieran angeschlossenen umlaufendes Bauteil geleitet werden, oder von einem Fluideinlass in dem umlaufenden Bauteil zu einem Fluidauslass aus dem Gehäuse.

Die erfindungsgemäße Ausführungsform ermöglicht auch eine besonders leichte Nachrüstbarkeit bestehender dynamischer Dichtungen, die eine Drehmomentabstützung des Gehäuses über einen elastisch verbiegbaren Arm aufweisen, mit einer Drehmomenterfassung, um die dynamische Dichtung g zu überwachen. Hier muss lediglich der Arm durch einen Arm mit einem verlagerbaren Bereich, dessen Position mit einem Hall-Sensor erfassbar ist, ausgetauscht werden, und ein entsprechender Hall-Sensor vorgesehen werden.

Die erfindungsgemäße Lösung vermeidet in der Überwachungsstrecke Reibung oder andere die Verlagerung des verlagerbaren Bereichs des Arms beeinflussende Größen, sodass eine sehr exakte Messung des Abstützmomentes der dynamischen Dichtung möglich ist.

Eine redundante Erfassung der Position des verlagerbaren Bereichs ist besonders leicht möglich. Hierfür können beispielsweise zwei Hall-Sensoren in Richtung der Drehachse übereinander positioniert werden und wenigstens einem gemeinsamen Magneten auf dem verlagerbaren Bereich des Arms in Richtung der Drehachse gegenüberstehen.

Mit der erfindungsgemäßen dynamischen Dichtung mit integrierter Überwachungsfunktion des vom stationär gehaltenen Ring auf das stationäre Gehäuse übertragenen Drehmomentes kann nicht nur die dynamische Dichtung selbst überwacht werden, sondern beispielsweise auch die Lagerung beziehungsweise wenigstens ein Lager, mit welchem das rotierende Bauteil im stationären Bauteil gelagert ist, kann überwacht werden. So kann das gesamte über die Drehmomentabstützung übertragenen Drehmoment sowohl ein in dem wenigsten einen Lager übertragenes Drehmoment als auch ein zwischen dem Gleitring und dem Gegenring übertragenes Drehmoment umfassen. Die beiden Drehmomentanteile können sich aufeinander aufaddieren und die Position des durch die Verbiegung verlagerbaren Bereiches des Arms hängt von den im Lager und zwischen dem Gleitring und dem Gegenring übertragenen Drehmomenten ab. Da gerade Lagerschäden zu einem großen Drehmomentanstieg führen, wird ein solcher Lagerschaden sicher erfasst. Für diese gemeinsame Überwachung ist nur notwendig, dass das Lagerdrehmoment und das zwischen den Gleitring und dem Gegenring wirkende Drehmoment gemeinsam über die Drehmomentabstützung auf einen stationären Bereich, an welchem das Gehäuse über die Drehmomentabstützung abgestützt ist, abgeleitet werden. Bevorzugt erfolgt die Ableitung beider Drehmomentanteile auch über das gemeinsame stationäre Gehäuse, in dem der stationär gehaltene Ring gelagert ist, wobei der Ring durch das stationäre Gehäuse selbst ausgebildet werden kann.

Gemäß einer bevorzugten Ausführungsform der Erfindung ist der Hall-Sensor als wenigstens zweidimensionaler Hall-Sensor (2D-Hall-Sensor) ausgeführt. Bei einem solchen zweidimensionalen Hall-Sensor stehen zwei Hall-Elemente beziehungsweise zwei Hall-Platten senkrecht zueinander und sind insbesondere punktsymmetrisch um einen Mittelpunk angeordnet. Damit kann in zwei senkrecht aufeinander stehenden Richtungen ein Magnetfeld erfasst werden, sodass in Abhängigkeit der Position des durch die Verbiegung in der Umfangsrichtung verlagerbaren Bereiches des Arms der Drehmomentabstützung beide Magnetfelder verändert werden. Damit kann anstelle einer erfassten absoluten Größe eines durch die Verlagerung veränderten Magnetfeldes das Verhältnis der beiden Größen der erfassten Magnetfelder beziehungsweise ein hieraus durch Überlagerung der beiden Magnetfelder erzeugter Magnetfeldvektor zur Bestimmung des Ausmaßes der Verlagerung des verlagerbaren Bereiches des Arms verwendet werden. Dies hat den Vorteil, dass eine aufgrund von Zuständen in der Umgebung, beispielsweise aufgrund von Verschmutzungen variierende absolute Größe des Magnetfeldes keinen verfälschenden Einfluss auf die Lageerfassung des verlagerbaren Bereiches des Arms hat. Selbstverständlich kann anstelle eines 2D-Hall-Sensors auch ein 3D-Hall-Sensor verwendet werden.

Die Erfindung soll nachfolgend anhand von Ausführungsbeispielen und den Figuren exemplarisch beschrieben werden.

Es zeigen:
- Figur 1: ein exemplarisches Ausführungsbeispiel einer Drehdurchführung mit einer Gleitringdichtung;
- Figur 2: eine schematische Draufsicht in Richtung der Drehachse auf eine Drehdurchführung mit einer erfindungsgemäßen Gleitringdichtung;
- Figur 3: eine schematische Darstellung einer redundanten Positionserfassung;
- Figur 4: eine alternative Ausgestaltung einer redundanten Positionserfassung.

Obwohl nachfolgend die Erfindung anhand einer Gleitringdichtung mit in Richtung der Drehachse gegeneinander abgestütztem Gleitring und Gegenring dargestellt wird, kann die erfindungsgemäße dynamische Dichtung bei jeglicher Abstützung zwischen einem stationärem Bauteil und einem um eine Drehachse rotierenden Bauteil verwendet werden.

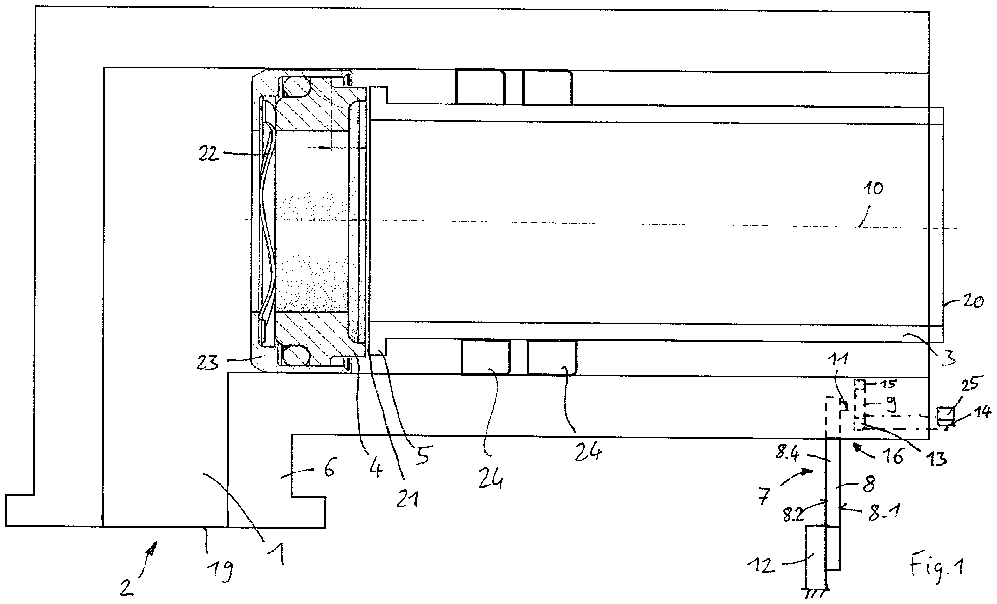

In der Figur 1 ist eine Drehdurchführung mit einem Fluideinlass 19 und einem Fluidauslass 20 gezeigt. Der Fluidauslass 20 ist in einem um die Drehachse 10 umlaufenden Bauteil 3 vorgesehen, der Fluideinlass 19 in einem stationären Bauteil 2, das hier durch das stationäre Gehäuse 6 gebildet wird. Im stationären Bauteil 2, hier dem Gehäuse 6, und dem rotierenden Bauteil 3 ist ein Kanal 1 vorgesehen, mit welchem ein Fluid aus dem stationären Bauteil 2 in das rotierende Bauteil 3 (oder umgekehrt) geleitet werden kann. Prinzipiell könnten auch mehrere voneinander getrennte Kanäle mit entsprechenden Fluideinlässen und -auslässen vorgesehen sein.

Zur Abdichtung des Kanals 1 ist eine Gleitringdichtung vorgesehen, umfassend einen Gleitring 4 und einen Gegenring 5, die gemeinsam einen Dichtspalt 21 abdichten. Hierfür wird der Gleitring 4 in Richtung der Drehachse 10 mittels eines Federelementes 22 elastisch gegen eine axiale Stirnseite des Gegenringes 5 gedrückt.

Im gezeigten Ausführungsbeispiel ist der Gleitring 4 zusammen mit dem Federelement 22 in einem Gleitringgehäuse 23 vorgesehen, das wiederum ortsfest in das Gehäuse 6 eingesetzt ist.

Das um die Drehachse 10 umlaufende Bauteil 3 ist über Lager, beispielsweise Wälzlager 24, im Gehäuse 6 gelagert.

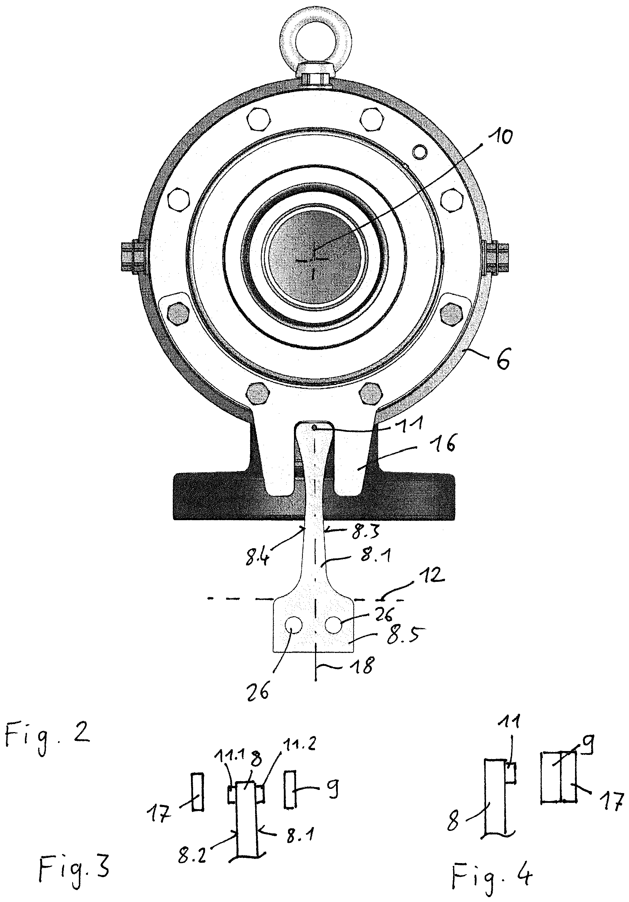

Dadurch, dass der Gleitring 4 elastisch gegen den Gegenring 5 gepresst wird, entsteht ein Drehmoment beziehungsweise Abstützmoment, das vom Gleitring 4 über das Gleitringgehäuse 23 auf das Gehäuse 6 übertragen wird. Das Gehäuse 6 ist wiederum über eine Drehmomentabstützung 7 an einem stationären Bereich 12 abgestützt, wobei die Drehmomentabstützung 7 einen elastisch verbiegbaren Arm 8 aufweist, der in einer Gabel 16 des Gehäuses 6 in Umfangsrichtung zur Drehachse 10 beidseitig abgestützt ist. Diese Drehmomentabstützung 7 mit dem Arm 8 und der Gabel 16 ist insbesondere auch aus der Figur 2 erkennbar.

In einem in der Umfangsrichtung verlagerbaren Bereich des Arms 8 ist ein Permanentmagnet 11 vorgesehen, der in Richtung der Drehachse 10 dem Hall-Sensor 9 gegenübersteht. Der Hall-Sensor 9 ist an eine geeignete Auswerteeinrichtung 25 angeschlossen.

Somit kann mit der Auswerteeinrichtung 25 und dem Hall-Sensor 9 eine Verlagerung des bewegbaren Bereiches des Arms 8 erfasst und ausgewertet werden und hieraus auf das Drehmoment geschlossen werden, das vom Gegenring 5 auf den Gleitring 4 übertragen wird und über das Gleitringgehäuse 23 und das Gehäuse 6 ein entsprechendes Abstützmoment erzeugt, das mit der Drehmomentabstützung 7 unter mehr oder minder starker elastischer Verformung des Arms 8 abgestützt wird.

Bevorzugt ist der Hall-Sensor 9 mit einem Temperatursensor 13 versehen, dessen Messwerte in einer Steuervorrichtung 14, die Bestandteil der Auswerteeinrichtung 25 sein kann, zur Kompensation einer Temperaturänderung herangezogen wird, die das Biegeverhalten des Arms 8 ändert. Auch der Hall-Sensor 13 kann eine Hall-Sensor-Steuervorrichtung 15 umfassen, die eine Temperaturkompensation der Messwerte des Hall-Sensors 13 durchführt.

Aus der Figur 2 sind vorteilhafte Merkmale des Arms 8 erkennbar. So kann der Arm 8 eine sich radial zur Drehachse 10 erstreckende Armlängsachse 18 aufweisen, wobei ein Ende des Arms 8 in Richtung der Armlängsachse 18 den verlagerbaren Bereich des Arms 8 ausbildet und das entgegengesetzte Ende ortsfest angeschlossen ist, hier am stationären Abstützbereich 12. Der Arm weist zwei im Wesentlichen ebene Seiten 8.1, 8.2 auf, siehe auch die Figur 1, sowie zwei diese verbindende gekrümmte, hier konkav gekrümmte Stirnseiten 8.3 und 8.4. Durch diese Formgebung ist das gewünschte Biegeverhalten des Arms für den Einzelfall besonders leicht einstellbar, beispielsweise durch Veränderung der Krümmung der Stirnseiten 8.3 und 8.4 oder durch Veränderung der Dicke des Arms 8, das heißt des Abstands der ebenen Seiten 8.1 und 8.2 zueinander.

Im gezeigten Ausführungsfall weist der Arm einen verbreiterten Fußteil 8.5 auf, der an dem dem verlagerbaren Bereich abgewandten Ende vorgesehen ist und Bohrungen 26 zum Anschluss des Arms aufweist.

In der Figur 3 ist schematisch ein Arm 8 dargestellt, der auf zwei entgegengesetzten Seiten, hier den beiden ebenen Seiten 8.1 und 8.2, jeweils einen Permanentmagneten 11.1 und 11.2 trägt, denen jeweils ein Hall-Sensor 9, 17 gegenübersteht. Damit kann eine redundante Erfassung des verlagerbaren Bereiches des Arms erreicht werden.

Bei dem Ausführungsbeispiel gemäß der Figur 4 stehen einem Permanentmagneten 11 zwei Hall-Sensoren 9, 17 hintereinander gegenüber, um die Redundanz zu erreichen.

### Bezugszeichenliste

- 1: Kanal
- 2: stationäres Bauteil
- 3: umlaufendes Bauteil
- 4: Gleitring
- 5: Gegenring
- 6: Gehäuse
- 7: Drehmomentabstützung
- 8: Arm
- 8.1, 8.2: ebene Seite
- 8.3, 8.4: Stirnseite
- 8.5: Fußteil
- 9: Hall-Sensor
- 10: Drehachse
- 11: Permanentmagnet
- 11.1, 11.2: Permanentmagnet
- 12: stationärer Bereich
- 13: Hall-Sensor
- 14: Steuervorrichtung
- 15: Hall-Sensor-Steuervorrichtung
- 16: Gabel
- 17: zweiter Hall-Sensor
- 18: Armlängsachse
- 19: Fluideinlass
- 20: Fluidauslass
- 21: Dichtspalt
- 22: Federelement
- 23: Gleitringgehäuse
- 24: Wälzlager
- 25: Auswerteeinrichtung
- 26: Bohrung

## Patentansprüche

1. Dynamische Dichtung zur Abdichtung wenigstens eines sich in einem stationären Bauteil (2) und einem um eine Drehachse (10) rotierenden Bauteil (3) erstreckenden, ein Fluid führenden Kanals (1) und/oder Raumes gegenüber einer Umgebung;
1.1 mit einem Gleitring (4) und einem Gegenring (5), die in Richtung der Drehachse (10) oder senkrecht oder winklig hierzu dichtend gegeneinander abgestützt sind und von denen einer als stationär gehaltener Ring und der andere als mit dem rotierenden Bauteil (3) umlaufender Ring ausgeführt ist, und
1.2 der stationär gehaltene Ring in einem stationären Gehäuse (6) gelagert ist, das in der Umfangsrichtung um die Drehachse (10) über eine Drehmomentabstützung (7) abgestützt ist; wobei
1.3 die Drehmomentabstützung (7) einen in der Umfangsrichtung mittels einem auf die Drehmomentabstützung (7) wirkenden Drehmoment elastisch verbiegbaren Arm (8), über welchen das Drehmoment abgestützt ist, aufweist;
**dadurch gekennzeichnet, dass**
1.4 dem Arm (8) wenigstens ein Hall-Sensor (9) zugeordnet ist, welcher die Position eines durch die Verbiegung in der Umfangsrichtung verlagerbaren Bereiches des Arms (8) erfasst; wobei
der verlagerbare Bereich des Arms (8) mit wenigstens einem Permanentmagneten (11) versehen ist, dessen Position mit dem Hall-Sensor (9), der dem Permanentmagneten (11) in Richtung der Drehachse (10) gegenübersteht, erfasst wird.

2. Dynamische Dichtung gemäß Anspruch 1, **dadurch gekennzeichnet, dass** der Arm (8) lösbar am Gehäuse (6) oder einem stationären Bereich (12), an welchem das Gehäuse (6) über die Drehmomentabstützung (7) abgestützt ist, angeschlossen ist.

3. Dynamische Dichtung gemäß einem der Ansprüche 1 oder 2, **dadurch gekennzeichnet, dass** ein Temperatursensor (13) zur Erfassung der Temperatur des Arms (8) oder einer Umgebung des Arms (8) vorgesehen ist, sowie eine Steuervorrichtung (14), die eingerichtet ist, die Messwerte des Temperatursensors (13) zu verarbeiten, um temperaturabhängige Veränderungen des Biegeverhaltens des Arms (8) bei der Positionserfassung zu berücksichtigen oder zu kompensieren.

4. Dynamische Dichtung gemäß Anspruch 3, **dadurch gekennzeichnet, dass** der Temperatursensor (13) in den Hall-Sensor (9) integriert ist, wobei der Hall-Sensor (9) insbesondere mit einer temperaturkompensierenden Hall-Sensor-Steuervorrichtung (15) versehen ist, welche die Messwerte des Temperatursensors (13) verarbeitet.

5. Dynamische Dichtung gemäß einem der Ansprüche 1 bis 4, **dadurch gekennzeichnet, dass** der Hall-Sensor (9) eingerichtet ist, ein Ausmaß der Verlagerung des verlagerbaren Bereiches des Arms (8) in der Umfangsrichtung zu erfassen.

6. Dynamische Dichtung gemäß einem der Ansprüche 1 bis 5, **dadurch gekennzeichnet, dass** der Arm (8) in der Umfangsrichtung beidseitig in einer Gabel (16) abgestützt ist.

7. Dynamische Dichtung gemäß Anspruch 6, **dadurch gekennzeichnet, dass** der Hall-Sensor (9) eingerichtet ist, eine Verlagerung des verlagerbaren Bereiches des Arms (8) in entgegengesetzten Richtungen in der Umfangsrichtung zu erfassen.

8. Dynamische Dichtung gemäß einem der Ansprüche 1 bis 7, **dadurch gekennzeichnet, dass** dem wenigstens einen Permanentmagneten (11) wenigstens ein zweiter Hall-Sensor (17) zugeordnet ist, der die Position des verlagerbaren Bereiches des Arms (8) redundant zu dem ersten Hall-Sensor (9) erfasst.

9. Dynamische Dichtung gemäß Anspruch 8, **dadurch gekennzeichnet, dass** der verlagerbare Bereich des Arms (8) mit wenigstens zwei Permanentmagneten (11.1, 11.2) auf zwei in Richtung der Drehachse (10) voneinander abgewandten Seiten des Arms (8) versehen ist, und auf den beiden Seiten des Arms (8) jeweils wenigstens ein Hall-Sensor (9, 17) dem jeweiligen Permanentmagneten (11.1, 11.2) gegenüberstehend angeordnet ist.

10. Dynamische Dichtung gemäß einem der Ansprüche 1 bis 9, **dadurch gekennzeichnet, dass** der Arm (8) eine sich radial zur Drehachse (10) erstreckende Armlängsachse (18) und eine sich entlang der Armlängsachse (18) erstreckende Plattenform aufweist, mit zwei voneinander abgewandten, sich entlang der Armlängsachse (18) erstreckenden, zumindest im Wesentlichen ebenen Seiten (8.1, 8.2) und zwei die ebenen Seiten (8.1, 8.2) verbindende, sich entlang der Armlängsachse (18) erstreckende Stirnseiten (8.3, 8.4), die gekrümmt, insbesondere konkav gekrümmt ausgeführt sind.

11. Dynamische Dichtung gemäß einem der Ansprüche 1 bis 10, **dadurch gekennzeichnet, dass** die Dichtung als Gleitringdichtung ausgeführt ist, wobei der Gleitring (4) und der Gegenring (5) in Richtung der Drehachse (10) dichtend gegeneinander abgestützt sind.

12. Drehdurchführung mit einer dynamischen Dichtung gemäß einem der Ansprüche 1 bis 11, wenigstens einem Fluideinlass (19) und wenigstens einem Fluidauslass (20), die fluidleitend mit dem ein Fluid führenden Kanal (1) und/oder Raum verbunden sind und von denen einer in dem Gehäuse (6) und der andere in dem umlaufenden Bauteil (3) mündet.

## Claims

1. Dynamic seal for sealing at least one channel (1) and/or space with respect to an environment, said channel or space extending in a stationary component (2) and a component (3) rotating about an axis of rotation (10) and conducting a fluid;
1.1 having a seal ring (4) and a mating ring (5) which are supported in a sealing manner against one another in the direction of the axis of rotation (10) or perpendicularly or at an angle thereto and of which one is designed as a ring held in a stationary manner and the other as a ring rotating with the rotating component (3), and
1.2 the ring held in a stationary manner is mounted in a stationary housing (6) which is supported in the circumferential direction about the axis of rotation (10) via a torque support (7); wherein
1.3 the torque support (7) has an arm (8) which can be bent elastically in the peripheral direction by means of a torque acting on the torque support (7) and via which the torque is supported;
**characterized in that**
1.4 the arm (8) is assigned at least one Hall sensor (9) which detects the position of a region of the arm (8) that can be displaced in the peripheral direction by the bending; wherein
the displaceable region of the arm (8) is provided with at least one permanent magnet (11), the position of which is detected by the Hall sensor (9) which is located opposite the permanent magnet (11) in the direction of the axis of rotation (10).

2. Dynamic seal according to claim 1, **characterized in that** the arm (8) is detachably connected to the housing (6) or to a stationary region (12) on which the housing (6) is supported via the torque support (7).

3. Dynamic seal according to one of claims 1 or 2, **characterized in that** a temperature sensor (13) is provided for sensing the temperature of the arm (8) or a vicinity of the arm (8), and a control device (14) is provided which is set up to process the measured values of the temperature sensor (13) in order to take into account or to compensate for temperature-dependent changes in the bending behavior of the arm (8) during the position sensing.

4. Dynamic seal according to claim 3, **characterized in that** the temperature sensor (13) is integrated into the Hall sensor (9), wherein the Hall sensor (9) is provided in particular with a temperature-compensating Hall sensor control device (15) which processes the measured values of the temperature sensor (13).

5. Dynamic seal according to one of claims 1 to 4, **characterized in that** the Hall sensor (9) is set up to detect an amount of displacement of the displaceable region of the arm (8) in the circumferential direction.

6. Dynamic seal according to one of claims 1 to 5, **characterized in that** the arm (8) is supported in the circumferential direction on both sides in a fork (16).

7. Dynamic seal according to claim 6, **characterized in that** the Hall sensor (9) is set up to detect a displacement of the displaceable region of the arm (8) in opposite directions in the circumferential direction.

8. Dynamic seal according to one of claims 1 to 7, **characterized in that** the at least one permanent magnet (11) is assigned at least one second Hall sensor (17) which detects the position of the displaceable region of the arm (8) redundantly with respect to the first Hall sensor (9).

9. Dynamic seal according to claim 8, **characterized in that** the displaceable region of the arm (8) is provided with at least two permanent magnets (11.1, 11.2) on two sides of the arm (8) facing away from each other in the direction of the axis of rotation (10), and at least one Hall sensor (9, 17) is arranged on each of the two sides of the arm (8) opposite the respective permanent magnet (11.1, 11.2).

10. Dynamic seal according to one of claims 1 to 9, **characterized in that** the arm (8) has an arm longitudinal axis (18) extending radially to the axis of rotation (10) and a plate shape extending along the arm longitudinal axis (18), having at least substantially planar sides (8.1, 8.2) facing away from one another and extending along the arm longitudinal axis (18) and two end sides (8.3, 8.4) which connect the planar sides (8.1, 8.2), extend along the arm longitudinal axis (18) and are curved, in particular concavely curved.

11. Dynamic seal according to one of claims 1 to 10, **characterized in that** the seal is designed as a face seal, wherein the seal ring (4) and the mating ring (5) are supported in a sealing manner against each other in the direction of the axis of rotation (10).

12. Rotary feedthrough having a dynamic seal according to one of claims 1 to 11, at least one fluid inlet (19) and at least one fluid outlet (20), which are connected in a fluid-conducting manner to the channel (1) and/or space carrying a fluid and of which one opens into the housing (6) and the other opens into the rotating component (3).

## Revendications

1. Joint d'étanchéité dynamique pour l'étanchéité vis-à-vis de l'environnement d'au moins un conduit (1) et/ou espace acheminant un fluide qui s'étend dans un composant stationnaire (2) et un composant rotatif (3) capable de rotation autour d'un axe de rotation (10),
1.1 avec une bague glissante (4) et une contre-bague (5) qui s'appuient l'une sur l'autre de façon étanche dans la direction de l'axe de rotation (10) ou perpendiculairement ou selon un angle par rapport à celui-ci et dont l'une est conformée comme une bague stationnaire et l'autre comme une bague qui tourne avec le composant rotatif (3), et
1.2 la bague stationnaire est supportée dans un boîtier stationnaire (6) qui s'appuie dans le sens de la circonférence autour de l'axe de rotation (10) sur un bras de reprise de couple (7),
1.3 le bras de reprise de couple (7) comportant un bras (8) flexible de façon élastique dans le sens de la circonférence au moyen d'un couple de rotation agissant sur le bras de reprise de couple (7), sur lequel le couple est repris,
**caractérisé en ce que**
1.4 le bras (8) est associé à au moins un capteur à effet Hall (9) qui détecte la position d'une zone du bras (8) qui peut être déplacée par la torsion dans le sens de la circonférence,
la zone du bras (8) qui peut être déplacée étant munie d'au moins un aimant permanent (11) dont la position est captée par le capteur à effet Hall (9) qui fait face à l'aimant permanent (11) dans la direction de l'axe de rotation (10).

2. Joint d'étanchéité dynamique selon la revendication 1, **caractérisé en ce que** le bras (8) est raccordé d'une façon pouvant être défaite au boîtier (6) ou à une zone stationnaire (12) sur laquelle le boîtier (6) s'appuie par l'intermédiaire du bras de reprise de couple (7).

3. Joint d'étanchéité dynamique selon l'une des revendications 1 ou 2, **caractérisé en ce qu'**il est prévu un capteur de température (13) pour capter la température du bras (8) ou d'un environnement du bras (8), ainsi qu'un dispositif de commande (14) configuré pour traiter les valeurs mesurées du capteur de température (13) afin de prendre en compte ou de compenser les changements du comportement de flexion du bras (8) liées à la température lors de l'acquisition de la position.

4. Joint d'étanchéité dynamique selon la revendication 3, **caractérisé en ce que** le capteur de température (13) est intégré dans le capteur à effet Hall (9), lequel capteur à effet Hall (9) est en particulier muni d'un dispositif de commande du capteur à effet Hall (15) compensant la température qui traite les valeurs de mesure du capteur de température (13).

5. Joint d'étanchéité dynamique selon l'une des revendications 1 à 4, **caractérisé en ce que** le capteur à effet Hall (9) est configuré pour capter une grandeur du déplacement de la zone du bras (8) qui peut être déplacée dans le sens de la circonférence.

6. Joint d'étanchéité dynamique selon l'une des revendications 1 à 5, **caractérisé en ce que** le bras (8) s'appuie des deux côtés dans le sens de la circonférence dans une fourche (16).

7. Joint d'étanchéité dynamique selon la revendication 6, **caractérisé en ce que** le capteur à effet Hall (9) est configuré pour capter un déplacement de la zone du bras (8) qui peut être déplacée dans des sens opposés dans le sens de la circonférence.

8. Joint d'étanchéité dynamique selon l'une des revendications 1 à 7, **caractérisé en ce que** l'au moins un aimant permanent (11) est associé à au moins un deuxième capteur à effet Hall (17) qui capte la position de la zone du bras (8) qui peut être déplacée de façon redondante en plus du premier capteur à effet Hall (9).

9. Joint d'étanchéité dynamique selon la revendication 8, **caractérisé en ce que** la zone du bras (8) qui peut être déplacée est munie d'au moins deux aimants permanents (11.1, 11.2) sur deux côtés du bras (8) opposés l'un à l'autre dans la direction de l'axe de rotation (10) et au moins un capteur à effet Hall (9, 17) est disposé de chaque côté du bras en face de l'aimant permanent (11.1, 11.2) correspondant.

10. Joint d'étanchéité dynamique selon l'une des revendications 1 à 9, **caractérisé en ce que** le bras (8) comporte un axe longitudinal de bras (18) qui s'étend dans le sens radial par rapport à l'axe de rotation (10) et une plate-forme qui s'étend le long de l'axe longitudinal de bras (18) ; avec deux faces (8.1, 8.2) au moins sensiblement plates opposées l'un à l'autre, qui s'étendent le long de l'axe longitudinal de bras (18), et deux faces d'extrémité (8.3, 8.4) reliant les deux faces plates (8.1, 8.2), qui s'étendent le long de l'axe longitudinal de bras (18) et qui ont une forme incurvée, en particulier une forme incurvée concave.

11. Joint d'étanchéité dynamique selon l'une des revendications 1 à 10, **caractérisé en ce qu'**il est réalisé comme une garniture mécanique, dans lequel la bague glissante (4) et la contre-bague (5) s'appuient de façon étanche l'une contre l'autre dans la direction de l'axe de rotation (10).

12. Traversée rotative comprenant un joint d'étanchéité dynamique selon l'une des revendications 1 à 11, au moins une entrée de fluide (19) et au moins une sortie de fluide (20), qui sont reliées pour la communication de fluide à un conduit (1) et/ou un espace acheminant du fluide et dont l'une débouche dans le boîtier (6) et l'autre dans le composant rotatif (3).
